# EUROPÄISCHE PATENTSCHRIFT

(11) **EP 1 879 775 B1**
(45) Veröffentlichungstag und Bekanntmachung des Hinweises auf die Patenterteilung: **02.06.2010**
(21) Anmeldenummer: 06724363.4
(22) Anmeldetag: 15.04.2006
(51) Int. Cl.: B60T 7/00

(54) **VERFAHREN ZUM STEUERN VON FAHRFUNKTIONEN EINES FAHRZEUGES**
METHOD FOR CONTROLLING DRIVING FUNCTIONS OF A MOTOR VEHICLE
PROCEDE POUR COMMANDER LES FONCTIONS DE CONDUITE D'UN VEHICULE

(30) Priorität: 11.05.2005 DE 102005021721
(43) Veröffentlichungstag der Anmeldung: 23.01.2008
(73) Patentinhaber: ZF FRIEDRICHSHAFEN Aktiengesellschaft, 88038 Friedrichshafen (DE)
(72) Erfinder: REITH, Ulrich, 88281 Schlier (DE); STEINBORN, Mario, 88046 Friedrichshafen (DE)
(86) Internationale Anmeldenummer: PCT/EP2006/003491
(87) Internationale Veröffentlichungsnummer: WO 2006/119838

(56) Entgegenhaltungen:
- DE-A1- 10 141 615
- DE-A1- 10 156 815

## Beschreibung

Die vorliegende Erfindung betrifft ein Verfahren zum Steuern von Fahrfunktionen eines Fahrzeuges gemäß dem Oberbegriff des Patentanspruches 1.

Es ist ganz allgemein in der modernden Fahrzeugtechnik bekannt, bestimmte, insbesondere gefährliche Fahrzustände mittels im Fahrzeug angeordneter Sensoren zu erfassen und die von den Sensoren ausgegebenen Sensorsignale in einer Steuereinheit zu verwerten sowie daraus Fahranweisungen zu bilden, um beispielsweise gefährlichen Fahrzuständen entgegenzuwirken. Bekannte Beispiele sind so genannte ABS-Systeme, mit denen die Bremskraft an den Fahrzeugrädern jeweils einzeln so dosiert wird dass diese nicht blockieren.

DE 10156815 beschreibt auch ein Verfahren gemäß dem Oberbegriff des Anspruchs 1.

Ein kritischer Fahrzustand insbesondere bei Nutzfahrzeugen, bei Geländefahrzeugen oder bei militärischen Fahrzeugen kann sich dann ergeben, wenn die Neigung des Fahrzeuges einen kritischen Wert überschreitet. So kann bei einer einen kritischen Wert überschreitenden Längsneigung der Fall eintreten, dass die Antriebskraft oder die Bremskraft nicht ausreicht, das Fahrzeug kontrolliert in Fahrt zu halten, oder dass das Fahrzeug um die Querachse kippt. Ebenso besteht bei einer einen kritischen Wert überschreitenden Querneigung die Gefahr, dass das Fahrzeug um die Längsachse kippt.

Es sei an dieser Stelle bemerkt, dass die Begriffe "Fahrzustände" bzw. "Fahranweisungen" auch für den Sonderfall gelten sollen, in welchem ein Fahrzeug noch nicht bzw. nicht mehr fährt, bzw. im Stand betrieben wird, wie beispielsweise bei Kranfahrzeugen oder dergleichen.

Insbesondere bei Fahrzeugen der weiter oben genannten Gruppe sind bereits Neigungsmesser bekannt, die aus pendelnd aufgehängten Zeigern bestehen, welche die jeweilige Längs- oder Querneigung auf einfachen Skalen anzeigen. Diese Neigungsmesser sind lediglich in der Lage, die aktuelle Neigung und gegebenenfalls eine auf der Skala markierte kritische Neigung anzuzeigen. Dazu muss der Fahrer den Neigungsmesser ständig im Auge behalten, was insbesondere bei schwierigen Fahrverhältnissen häufig nicht möglich ist, so dass die Gefahr besteht, dass ein kritischer Fahrzustand unter Umständen nicht oder zu spät bemerkt wird.

So ist beispielgebend aus der DE 101 56 815 A1 ein Verfahren zum Steuern von Fahrfunktionen eines Fahrzeugs mittels einer Steuereinheit bekannt, welche bestimmte Fahrzustände erfassende Sensorsignale verwertet und daraus Fahranweisungen oder dergleichen bildet. Die Neigung des Fahrzeuges gegenüber der Horizontalen wird mittels eines Neigungssensors erfasst und die Neigungssensorsignale werden in die Steuereinheit eingegeben.

Aus der DE 23 55 523 ist eine elektronische Wam- und Sicherheitsvorrichtung zur Ausnutzung eines zulässigen Standmomentes bekannt, bei dem bei Erreichen einer das Fahrzeug kippenden Beladungsverteilung eine Warnung ausgegeben wird.

Vor diesem Hintergrund liegt der Erfindung eine Aufgabe zugrunde, ein Verfahren der im Oberbegriff des Anspruches 1 genannten Art zu schaffen, mit welchem eine Fahrunterstützung oder Anzeigehilfe zur Verfügung gestellt wird.

Die Lösung der vorgenannten Aufgaben ergibt sich aus den Merkmalen des Hauptanspruchs.

Die Erfindung geht demnach aus von einem Verfahren zum Steuern von Fahrfunktionen eines Fahrzeuges mittels einer Steuereinheit, welche bestimmte, vorgegebene Fahrzustände erfassende Sensorsignale verwertet und daraus Fahranweisungen oder dergleichen bildet. Es sei an dieser Stelle bemerkt, diese "Fahranweisungen" an den Fahrer gehen können, welcher dieser dann über die Bedienungseinrichtungen umsetzt, oder direkt an anzusteuernde Aggregate des Fahrzeuges, wie Motor, Getriebe, Bremsen und dergleichen, bzw. an diesbezügliche Aktuatoren.

Die Neigung des Fahrzeuges gegenüber der Horizontalen wird mittels wenigstens eines Neigungssensors erfasst, und die Neigungssensorsignale werden in die Steuereinheit eingegeben und bei der Bildung von Fahranweisungen oder dergleichen bei neigungsrelevanten Fahrzuständen verwertet.

Ebenso sieht die Erfindung vor, dass die Längsneigung oder die Querneigung erfasst wird, wobei jedoch vorzugsweise beide Neigungen erfasst werden, da beide zu einem kritischen Fahrzustand führen können.

Ein wichtiger Parameter, welcher in der Steuereinheit zu Fahranweisungen des Fahrzeuges verarbeitet wird, ist der positive bzw. negative Fahrwiderstand, welcher sich aus dem von der Motorsteuerung gemeldeten Antriebs- oder Bremsdrehmoment ergibt. Dieser Fahrwiderstand ist beispielsweise für die Berechnung des aktuellen Grenzganges, des für die aktuelle Situation geeigneten Anfahrganges usw. maßgebend. Es lässt sich zeigen, dass die Berechnung des Fahrwiderstandes durch Berücksichtigung der jeweiligen Fahrzeugneigung erheblich verbessert werden kann, wie im Folgenden anhand von Beispielen dargelegt wird.

### Grenzgangberechnung

Bei Kenntnis der jeweiligen Längsneigung des Fahrzeuges lässt sich der aktuelle Grenzgang (Gang, mit dem eine Steigung befahren werden kann, ohne an Geschwindigkeit zu verlieren bzw. Gang, mit dem ein Gefälle befahren werden kann, ohne an Geschwindigkeit zu gewinnen) genauer berechnen als mit dem Antriebs- bzw. Bremsdrehmoment allein.

### Anfahrgangberechnung

Die Auswahl eines geeigneten Anfahrganges beruht im Wesentlichen auf der Berechnung des aktuellen Fahrwiderstandes. Wenn das Fahrzeug zuletzt in der Ebene fuhr und dann in einer gerade beginnenden Steigung (positiv oder negativ) zum Stehen kommt, dann bleibt eine Fahrwiderstandsberechnung allein aufgrund des zuletzt gemessenen Antriebs- oder Bremsdrehmomentes ohne Einbeziehung der gerade beginnenden Steigung ungenau. Das gleiche gilt, wenn das Fahrzeug zuletzt in einem Gefälle fuhr und bei Beginn einer Steigung zum Stehen kommt, oder wenn das Fahrzeug in einer Steigung fuhr und beim Beginn eines Gefälles zum Stehen kommt, oder wenn das Fahrzeug aus einer positiven oder negativen Steigung kommend am Beginn einer Ebene zum Stehen kommt. Ein Neigungssensor kann diese Situationen erkennen und als zusätzliche Information in der Steuereinheit verwerten, um einen geeigneten Anfahrgang zu berechnen.

### Verbesserung einer Anfahrhilfefunktion

Die Kenntnis des aktuellen Fahrwiderstandes unter Einbeziehung der Fahrzeuglängsneigung lässt sich auch zur Vorparametrisierung einer Anfahrhilfefunktion nutzen. Steht ein Fahrzeug in einer Steigung, dann müssen die Bremsen relativ lang gehalten werden, um das Rückwärtsrollen des Fahrzeuges zu verhindern. Steht ein Fahrzeug in einem Gefälle, dürfen die Bremsen nicht zu lange gehalten werden, weil sonst der Antriebsstrang verspannt werden könnte und das Fahrzeug losbricht, sobald die Bremsen öffnen. Steht das Fahrzeug in der Ebene, müssen die Bremsen das Fahrzeug überhaupt nicht halten. Ein Bremseneingriff wäre eher störend. Auch hier besteht die Gefahr, dass das Fahrzeug gegen die Bremse anfährt und losbricht, wenn die Bremsen öffnen. Unter Berücksichtigung der aktuellen Fahrzeuglängsneigung kann die Anfahrhilfefunktion optimiert werden.

### Plausibilisierung des berechneten Fahrwiderstandes

Bei Kenntnis der aktuellen Längsneigung des Fahrzeuges kann die Plausibilität des von der Steuereinheit berechneten Fahrwiderstandes überprüft werden. Wenn sich beispielsweise aus der Fahrwiderstandsberechnung eine Steigung ergibt, der Sensor jedoch ein Gefälle detektiert, dann kann auf einen Berechnungsfehler und damit auf eine Fehlfunktion der Steuereinheit geschlossen werden.

### Erkennung von Nebenverbrauchern

Aus dem berechneten Fahrwiderstand kann die Fahrbahnneigung berechnet werden. Unterscheiden sich die berechnete und die vom Neigungssensor angegebene Fahrbahnneigung, so kann dies an einem Nebenabtrieb liegen, der einen Teil des vom Motor erzeugten Drehmomentes im Lastbetrieb aufnimmt.

### Berechnung des Fahrwiderstandes während der Bremsung, bei Kupplungsschlupf oder bei Spezialanwendungen

Während einer Bremsung bzw. bei teilgeöffneter oder geöffneter Kupplung kann der aktuelle Fahrwiderstand von einer herkömmlichen Steuereinheit ohne Kenntnis der aktuellen Fahrbahnneigung nicht berechnet werden. Eine Verwertung der von einem Neigungssensor gemessenen Fahrbahnneigung ermöglicht auch bei diesen Fahrzuständen eine zutreffende Berechnung des Fahrwiderstandes. Dadurch können folgende Funktionen realisiert bzw. verbessert werden:

### Regelgüte von Dauerbremsen

Wenn eine Dauerbremse unter Einbeziehung des jeweils aktuellen, veränderlichen Fahrwiderstandes betrieben wird, dann kann die Regelgüte der Dauerbremse, also die Anpassung der Bremsleistung an den jeweiligen Fahrwiderstand, verbessert werden.

### Auswahl geeigneter Bremsen

Mit dem jeweils aktuellen, veränderlichen Fahrwiderstand lässt sich abschätzen, welche Bremse den aktuellen Verzögerungswunsch des Fahrers am effizientesten umsetzen kann. Es kann außerdem ausgewählt werden, welche Kombination verschiedener Bremssysteme den aktuellen Verzögerungswunsch des Fahrers am besten umsetzen kann. Diese Bremssysteme können verschleißlos oder einen Bremsbelag verschleißend ausgebildet sein.

### Bremskraftverteilung

In Kenntnis des jeweils aktuellen, veränderlichen Fahrwiderstandes unter Berücksichtigung der Fahrbahnneigung kann eine Freilastberechnung an den Bremsen durchgeführt werden. So kann ermittelt werden, welches Rad an welcher Achse wie stark abgebremst werden kann, ohne dass die Gefahr besteht, dass Gleitreibung auftritt. Mit einer solchen Freilastberechnung ließe sich auch der Reifenverschleiß günstig auf die einzelnen Räder verteilen.

### Spezialanwendungen

Die Berechnung des Fahrwiderstandes durch herkömmliche Steuereinheiten setzt voraus, dass das Fahrzeug eine gewisse Strecke mit etwa gleichbleibenden Einflussparametern zurücklegt. Wenn diese Voraussetzung nicht gegeben ist (wie beispielsweise bei Spezialfahrzeugen, etwa Abfallsammelfahrzeugen mit ihrem STOP-AND-GO-Betrieb usw.), dann kann der Fahrwiderstand nur bedingt berechnet werden. Unter Einbeziehung der aktuellen Fahrbahnneigung lässt sich der Fahrwiderstand auch bei diesen Fahrzeugen berechnen.

### Erkennung von Steigungswechseln

Insbesondere bei Fahrzeugen, die im Gelände unterwegs sind, ist es wichtig, Steigungswechsel sehr schnell zu erkennen. Wenn beispielsweise ein Fahrzeug in der Ebene fährt und der Fahrer vor einem abrupten Anstieg beschleunigt, weil er Schwung holen will, dann sind Bedingungen erfüllt (relativ geringer Fahrwiderstand, Leistungsüberschuss und Beschleunigung des Fahrzeuges), bei denen die in der Steuereinheit abgelegte Fahrstrategie ein Getriebe hoch schaltet. Wenn das Fahrzeug in die Steigung einfährt, dauert es eine gewisse Zeit, bis die Fahrwiderstandsberechnung die Steigung erkennt. Wenn die Fahrwiderstandsberechnung zeitlich sehr weit nacheilt, kann es statt einer jetzt erforderlichen Rückschaltung sogar zu einer weiteren Hochschaltung am Berg kommen. Das Fahrzeug kann dadurch sogar zum Stehen kommen. Wenn die von einem Neigungssensor gemessene Fahrbahnneigung in die Fahrwiderstandsberechnung mit einbezogen wird, dann kann die Steuereinheit unmittelbar auf den abrupten Anstieg reagieren und die benötigte Rückschaltung veranlassen.

### Berechnung schaltbarer Gänge

Aufgrund einer Fahrwiderstandsberechnung kann der Geschwindigkeitsverlust oder der Geschwindigkeitsgewinn während eines Schaltvorganges bei Bergauffahrt bzw. bei Bergabfahrt berechnet werden. Unter Einbeziehung der vom Neigungssensor gelieferten Fahrbahnneigung lässt sich diese Berechnung präzisieren.

### Erkennen von Wellenstrecken

Bei Wellenstrecken wechselt der Fahrwiderstand ständig sein Vorzeichen. Eine Schaltstrategie ist bei herkömmlichen Steuereinheiten so programmiert, dass sie auf Änderungen des Fahrwiderstandes schnell reagiert und einen für die Fahrsituation günstigen Gang auswählt. Bei einer Wellenstrecke führt dies zu ständig neuen Ganganforderungen. Je nach Gelände kann es mit bekannten Steuerungsverfahren dadurch sogar zum Fahrzeugstillstand kommen. Unter Einbeziehung der von einem Neigungssensor gelieferten aktuellen Fahrbahnneigung lässt sich eine solche Wellenstrecke jedoch erkennen. Die Schaltstrategie könnte dann an die aktuellen Gegebenheiten angepasst werden.

### Rollen im Leerlauf (Segeln)

Bei einem bekannten Fahrzeug öffnet die Steuereinheit den Antriebsstrang, wenn das Fahrzeug aufgrund einer entsprechenden Hangabtriebskraft dahinrollt, um Kraftstoff zu sparen. Weil der Antriebsstrang sofort geschlossen werden muss, wenn das Gefälle zunimmt und das Fahrzeug zu stark beschleunigt, ist es wichtig, den Winkel des Gefälles zu kennen. Diese Information liefert der Neigungssensor, dessen Signal in der Steuereinheit verwertet wird, so dass diese antriebslose Vortriebsphase entsprechend abgesichert ist.

Gemäß einer weiteren Ausgestaltung der Erfindung ist vorgesehen, dass die erfasste Neigung des Fahrzeuges zur Verteilung von Fluidansammlungen bei fluidbefüllten Aggregaten des Fahrzeuges ausgewertet wird. Wenn das Fahrzeug über einen längeren Zeitraum in einer Fahrbahnneigung fährt oder in einer Fahrbahnneigung stehend betrieben wird, kann es in allen fluidbefüllten Aggregaten (beispielsweise dem Motor, dem Getriebe, der Bremse usw.) zu Problemen mit der Schmierung oder mit der von diesen Aggregaten zu erfüllenden Funktion kommen, wenn sich das Fluid an einer Stelle sammelt. Es besteht dann beispielsweise auch die Möglichkeit, dass für Spritzöl ausgelegte Dichtungen den durch die Ansammlung entstehenden statischen Drücken nicht standhalten. Ein weiteres Problem kann dadurch entstehen, dass in diesem Fall eine Ölansaugung nicht mehr funktioniert, da das Öl den Ansaugstutzen nicht mehr überdeckt. Ein Neigungssensor kann in Verbindung beispielsweise mit einem Zeitgeber die Bedingungen erkennen, die zu derartigen Ölansammlungen führen und eine Warnung veranlassen, bevor der Fahrzustand kritisch wird oder ein stationärer Betrrieb zu Schäden führen kann. Eine solche Warnung wird vorzugsweise dann erzeugt, wenn eine bestimmte Fahrzeugneigung länger als einen vorbestimmten Zeitraum andauert.

## Patentansprüche

1. Verfahren zum Steuern von Fahrfunktionen eines Fahrzeuges mittels einer Steuereinheit, welche bestimmte Fahrzustände erfassende Sensorsignale verwertet und daraus Fahranweisungen bildet, wobei die Neigung des Fahrzeuges gegenüber der Horizontalen mittels wenigstens eines Neigungssensors erfasst wird, und dass die Neigungssensorsignale in die Steuereinheit eingegeben sowie bei der Bildung von Fahranweisungen oder dergleichen bei neigungsrelevanten Fahrzuständen verwertet werden und die Längsneigung und/oder die Querneigung des Fahrzeuges erfasst wird, **dadurch gekennzeichnet, dass** die erfasste Neigung des Fahrzeuges zur Ermittlung des jeweiligen positiven bzw. negativen Fahrwiderstandes ausgewertet wird.

## Claims

1. Method for controlling driving functions of a vehicle by means of a control unit which utilizes sensor signals covering certain driving states, and forms driving instructions therefrom, wherein the inclination of the vehicle with respect to the horizontal is sensed by means of at least one inclination sensor, and in that the inclination sensor signals are input into the control unit and are utilized during the formation of driving instructions or the like in driving states which are relevant to inclination, and the longitudinal inclination and/or the lateral inclination of the vehicle is sensed, **characterized in that** the sensed inclination of the vehicle is evaluated in order to determine the respective positive or negative driving resistance.

## Revendications

1. Procédé pour commander les fonctions de conduite d'un véhicule au moyen d'une unité de commande, qui utilise des signaux de capteurs détectant des états de conduite déterminés et forme, à partir de ceux-ci, des indications de conduite, l'inclinaison du véhicule par rapport à l'horizontale étant détectée au moyen d'au moins un capteur d'inclinaison, et les signaux de capteur d'inclinaison étant saisis dans l'unité de commande et étant utilisés lors de la formation d'indications de conduite ou similaires dans le cas d'états de conduite pertinents relatifs à l'inclinaison, et l'inclinaison longitudinale et/ou l'inclinaison transversale du véhicule étant détectée, **caractérisé en ce que** l'inclinaison détectée du véhicule est analysée pour déterminer la résistance de conduite positive ou négative respective.
